# EUROPEAN PATENT APPLICATION

(11) **EP 3 247 150 A1**
(43) Date of publication of application: **22.11.2017**
(21) Application number: 15877505.6
(22) Date of filing: 30.03.2015
(51) Int. Cl.: H04W 36/06, H04W 88/08, H04W 88/18, H04W 84/12, H04W 52/02

(54) **WIFI DEVICE, AND OPERATING METHOD AND DEVICE OF WIFI CHIP THEREIN**

(30) Priority: 14.01.2015 CN 201510019257
(71) Applicant: ZTE Corporation, Shenzhen, Guangdong 518057 (CN)
(72) Inventor: LIU, Weipeng, Shenzhen Guangdong 518057 (CN); ZHANG, Chao, Shenzhen Guangdong 518057 (CN); ZHANG, Qi, Shenzhen Guangdong 518057 (CN)
(74) Representative: Novagraaf Technologies
(86) International application number: PCT/CN2015/075419
(87) International publication number: WO 2016/112587

(57) **Abstract**

A WIFI device and an operating method and device of WIFI chips in a WIFI device are provided. In the operating method, an instruction indicating selection of an operation mode of a first WIFI chip and a second WIFI chip in a WIFI device is received (S202); the first WIFI chip is triggered to operate on a first frequency band and the second WIFI chip is triggered to operate on a second frequency band when the operation mode indicated by the instruction is a first mode (S204). The first WIFI chip supports the first frequency band and the second frequency band, and the second WIFI chip supports the second frequency band. The solution solves the problem that the single WIFI chip in MIFI products of the related technology can only implement an inter-frequency function by adopting a manner of channel switching, thus avoiding intermittent loss of scanning of SSID, unsuccessful access or connection interruption caused by the adoption of channel switching for realizing the inter-frequency function. By virtue of the solution, provision of the inter-frequency function is truly realized on MIFI.

## Description

### Technical field

The present disclosure relates to the field of communications, and in particular to a Wireless Fidelity (WIFI) device, and an operating method and device of WIFI chips in a WIFI device.

### Background

At present, universal functions of portable broadband wireless (e.g., Mobile-WiFi, abbreviated as MIFI) products generally include Service Set Identifier (SSID) function. That is, the operating device may simultaneously support two wireless Access Points (APs), respectively MAIN SSID and GUEST SSID. The user may configure the parameters of the two SSIDs respectively, so as to achieve different password security levels for the two SSIDs. The access permission for GUEST SSID access may also be controlled, for example, a user accessing the GUEST SSID may access an external network only, but cannot configure a UFI (Universal Serial Bus (USB) WIFI) product through a local page.

As the WIFI technology has advantages such as wide bandwidth, less interference and high speed on a 5G band, with the rapid evolution of intelligent terminals, the amount of mobile terminals supporting 5G band is continuously increasing, and many users expect to use the 5G band when using WIFI. At the same time, users may also use terminal devices supporting 2.4G band but not supporting 5G band. Therefore, in addition to supporting the access of 5G terminal devices, the access of 2.4G terminal devices also needs to be supported so that the 2.4G terminal devices can use WIFI normally, and higher WIFI rates can be provided under the premise of guaranteeing that all terminal devices can normally connect to the network through the WIFI.

Taking into consideration factors such as product cost, size, power consumption, etc., MIFI products are basically designed based on a single WIFI chip architecture. Due to the limitations of the WIFI chip, multi-SSID functions of most of the MIFI products may only operate in an intra-frequency operation mode (i.e., Secondary Component Carrier (SCC) mode), that is, both SSIDs operate on the 2.4G band or both SSIDs operate on the 5G band. However, such an operation mode is difficult to effectively meet practical user requirements, because if the UFI operates on the 5G band, other terminal devices not supporting the 5G band cannot connect to the UFI. In order to solve such a problem, WIFI may be suggested to operate in an inter-frequency operation mode, that is, in a multi-SSID scenario, one SSID operates on the 2.4G band while the other SSID operates on the 5G band, and the parameters of each SSID may be configured independently.

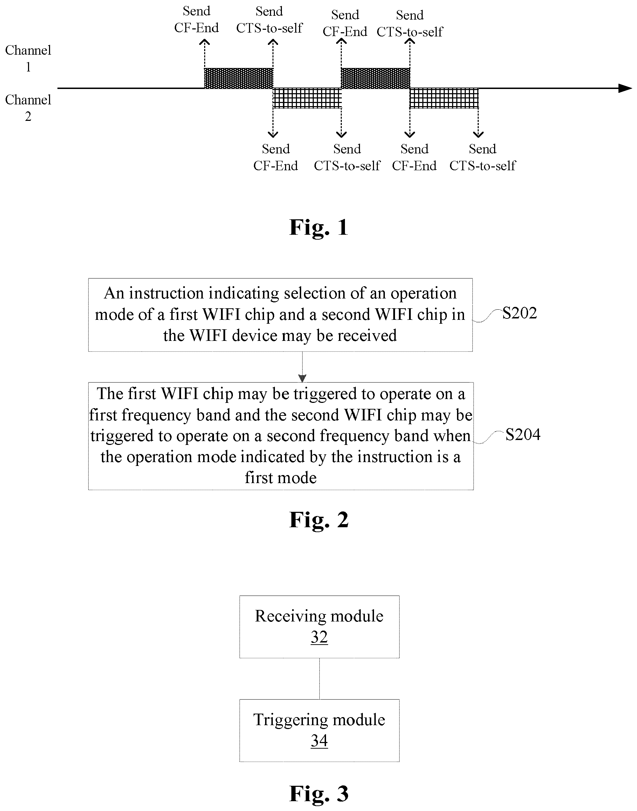

At present, several WIFI chip products manufactured by Qualcomm and Broadcom are able to support the inter-frequency operation mode, that is, one WIFI chip can support the operation of two SSIDs at the same time, where one SSID operates on the 2.4G band while the other SSID operates on the 5G band. Fig. 1 is schematic diagram showing the implementation of an inter-frequency operation mode by adopting one WIFI chip according to a related technology. As shown in Fig. 1, in order to support the inter-frequency operation mode, the chip manufacturers adopt a manner of CTS-To-Self. That is, the chip may send a Clear To Send (CTS) message to the chip itself to protect the corresponding channel. The CTS message may prevent a working station on the current channel (e.g., Channel 1) from using this channel for a period of time, so that the WIFI chip can operate on the other channel (e.g., Channel 2) for a short time. In a very short time, the chip adopts the manner of CTS-To-Self again to sending a CTS message to the chip itself on the current channel (Channel2), so that the chip can in turn operate on the other channel (Channel1).

In other words, the WIFI chip in the related technology controls, in a way of software, itself to operate on the 2.4G band for a period of time and operate on the 5G band for another period of time. Because the switching time is very short (e.g., no more than 32ms), the MIFI products appear to support the operation on the 2.4G band and the 5G band at the same time from the user's point of view.

However, the MIFI products in the related technology can only actually operate on one frequency band at the same time, so the rate under this mechanism in the related technology is only 50% of the rate under the intra-frequency operation mode. In addition, because the other stations may also send Request To Send (RTS) or CTS message during the repeated channel switching, problems such as intermittent loss of scanning of SSID, unsuccessful access or connection interruption may arise under this mechanism, and such problems may be more obvious in a high interference environment.

In order to better meet practical usage requirements of users and ensure download rate and access stability of the users while ensuring the characteristics (such as small size and low power consumption) of MIFI products, a new solution may need to be provided.

For the problem that the single WIFI chip in MIFI products of the related technology can only implement an inter-frequency function by adopting a manner of channel switching, an effective solution has not yet been provided.

### Summary

Some embodiments of the present disclosure provide a WIFI device, and an operating method and device of WIFI chips in a WIFI device, which can solve at least the problem that the single WIFI chip in MIFI products of the related technology can only implement an inter-frequency function by adopting a manner of channel switching.

According to an embodiment of the present disclosure, there is provided an operating method of Wireless Fidelity (WIFI) chips in a WIFI device. The operating method may include the following acts. An instruction indicating selection of an operation mode of a first WIFI chip and a second WIFI chip in the WIFI device may be received. The first WIFI chip may be triggered to operate on a first frequency band and the second WIFI chip may be triggered to operate on a second frequency band when the operation mode indicated by the instruction is a first mode. In the operating method, the first WIFI chip may support the first frequency band and the second frequency band, and the second WIFI chip may support the second frequency band.

In an exemplary embodiment, the operating method may further include the following acts. Activation of a plurality of Service Set Identifier (SSID) functions in the first WIFI chip may be triggered and the second WIFI chip may be turned off, when the operation mode indicated by the instruction is a second mode. The first WIFI chip may be triggered to operate on the first frequency band or the second frequency band.

In an exemplary embodiment, the operating method may further include the following acts. Activation of a single Service Set Identifier (SSID) function in the first WIFI chip may be triggered and the second WIFI chip may be turned off, when the operation mode indicated by the instruction is a third mode. The first WIFI chip may be triggered to operate on the first frequency band or the second frequency band.

In an exemplary embodiment, after the first WIFI chip and the second WIFI chip are triggered to operate in the operation mode indicated by the instruction, the operating method may include the following acts. Whether the first WIFI chip and/or the second WIFI chip have user access may be periodically detected. Upon detecting that the first WIFI chip and/or the second WIFI chip have user access, periodical detection may be triggered again. Upon detecting that the first WIFI chip and/or the second WIFI chip have no user access, a WIFI chip without user access may be deactivated.

In an exemplary embodiment, the first frequency band may be a 5G band and the second frequency band may be a 2.4G band.

According to an embodiment of the present disclosure, there is provided a Wireless Fidelity (WIFI) device. The WIFI device may include a primary WIFI chip, a secondary WIFI chip, a first radio frequency switch and a second radio frequency switch. The first radio frequency switch and the second radio frequency switch may be respectively coupled to the primary WIFI chip and the secondary WIFI chip. The first radio frequency switch and the second radio frequency switch may cooperate with each other and may be configured to control selection of an operation mode of the primary WIFI chip and the secondary WIFI chip. The first radio frequency switch and the second radio frequency switch may be configured to control the primary WIFI chip to operate on a first frequency band and the secondary WIFI chip to operate on a second frequency band when the selected operation mode is a first mode, wherein the primary WIFI chip supports the first frequency band and the second frequency band, and the secondary WIFI chip supports the second frequency band.

In an exemplary embodiment, the first radio frequency switch and the second radio frequency switch may be configured to control, when the selected operation mode is a selected mode, a plurality of Service Set Identifier (SSID) functions in the primary WIFI chip are activated and the secondary WIFI chip is turned off, the primary WIFI chip to operate on the first frequency band or the second frequency band.

In an exemplary embodiment, the first radio frequency switch and the second radio frequency switch may be configured to control, when the selected operation mode is a third mode, a single Service Set Identifier (SSID) function in the primary WIFI chip is activated and the secondary WIFI chip is turned off, the primary WIFI chip to operate on the first frequency band or the second frequency band.

In an exemplary embodiment, the first frequency band may be a 5G band and the second frequency band may be a 2.4G band.

According to an embodiment of the present disclosure, there is provided an operating device of Wireless Fidelity (WIFI) chips in a WIFI device. The operating device may include a receiving module and a triggering module. The receiving module may be configured to receive an instruction indicating selection of an operation mode of a first WIFI chip and a second WIFI chip in the WIFI device. The triggering module may be configured to trigger the first WIFI chip to operate on a first frequency band and the second WIFI chip to operate on a second frequency band when the operation mode indicated by the instruction is a first mode, wherein the first WIFI chip supports the first frequency band and the second frequency band, and the second WIFI chip supports the second frequency band.

In an exemplary embodiment, the operating device may further include a detecting module. The detecting module may be configured to periodically detect whether the first WIFI chip and/or the second WIFI chip have user access. Upon detecting that the first WIFI chip and/or the second WIFI chip have user access, periodical detection may be triggered again. Upon detecting that the first WIFI chip and/or the second WIFI chip have no user access, a WIFI chip without user access may be deactivated.

According to some embodiments of the present disclosure, a first WIFI chip and a second WIFI chip are provided, and the first WIFI chip supports a first frequency band and a second frequency band, and the second WIFI chip supports the second frequency band. When the first WIFI chip and the second WIFI chip receive an instruction indicating that a selected operation mode is a first mode, the first WIFI chip is triggered to operate on the first frequency band and the second WIFI chip is triggered to operate on the second frequency band. By virtue of the above solution, different WIFI chips are enabled to operate on different frequency bands simultaneously. The problem that the single WIFI chip in MIFI products of the related technology can only implement an inter-frequency function by adopting a manner of channel switching is solved, thus avoiding intermittent loss of scanning of SSID, unsuccessful access or connection interruption caused by the adoption of channel switching for realizing the inter-frequency function. By virtue of the solution, provision of the inter-frequency function is truly realized on MIFI.

### Brief Description of the Drawings

The drawings described herein are adopted to provide further understanding of the present disclosure, and form a part of the present application. The schematic embodiments and description of the present disclosure are adopted to explain the present disclosure, and do not form limits to the present disclosure. In the drawings:
Fig. 1 is schematic diagram showing the implementation of an inter-frequency operation mode by adopting one WIFI chip according to a related technology;
Fig. 2 is a flowchart of an operating method of WIFI chips in a WIFI device according to an embodiment of the present disclosure;
Fig. 3 is a block diagram showing the structure of an operating device of WIFI chips in a WIFI device according to an embodiment of the present disclosure;
Fig. 4 is a block diagram showing the structure of an operating device of WIFI chips in a WIFI device according to an embodiment of the present disclosure;
Fig. 5 is a block diagram showing the structure of a WIFI device according to an embodiment of the present disclosure;
Fig. 6 is a block diagram showing the structure of a WIFI device according to an exemplary embodiment of the present disclosure;
Fig. 7 is a block diagram showing the structure of a WIFI radio frequency processing module according to an exemplary embodiment of the present disclosure; and
Fig. 8 is a flowchart of a processing method for WIFI operation mode according to an exemplary embodiment of the present disclosure.

### Detailed Description of the Embodiments

It may be appreciated that embodiments in the present application and features in the embodiments may be combined under the condition of no conflicts. The present disclosure will be illustrated hereinbelow with reference to the drawings and in conjunction with the embodiments in detail.

An embodiment provides an operating method of WIFI chips in a WIFI device. Fig. 2 is a flowchart of an operating method of WIFI chips in a WIFI device according to an embodiment of the present disclosure. As shown in Fig. 2, the operating method may include the following acts S202 and S204.

At act S202, an instruction indicating selection of an operation mode of a first WIFI chip and a second WIFI chip in the WIFI device may be received.

At act S204, the first WIFI chip may be triggered to operate on a first frequency band and the second WIFI chip may be triggered to operate on a second frequency band when the operation mode indicated by the instruction is a first mode.

In the operating method, the first WIFI chip may support the first frequency band and the second frequency band, and the second WIFI chip may support the second frequency band.

According to the present embodiment, a first WIFI chip and a second WIFI chip are provided, and the first WIFI chip supports a first frequency band and a second frequency band, and the second WIFI chip supports the second frequency band. When the first WIFI chip and the second WIFI chip receive an instruction indicating that a selected operation mode is a first mode, the first WIFI chip is triggered to operate on the first frequency band and the second WIFI chip is triggered to operate on the second frequency band. By virtue of the above solution, different WIFI chips are enabled to operate on different frequency bands simultaneously. The problem that the single WIFI chip in MIFI products of the related technology can only implement an inter-frequency function by adopting a manner of channel switching is solved, thus avoiding intermittent loss of scanning of SSID, unsuccessful access or connection interruption caused by the adoption of channel switching for realizing the inter-frequency function. By virtue of the solution, provision of the inter-frequency function is truly realized on MIFI.

In some embodiments, the operation mode may also include a second mode and a third mode. When the operation mode indicated by the instruction is a second mode, activation of a plurality of Service Set Identifier (SSID) functions in the first WIFI chip may be triggered and the second WIFI chip may be turned off. The first WIFI chip may be triggered to operate on the first frequency band or the second frequency band.

When the operation mode indicated by the instruction is a third mode, activation of a single Service Set Identifier (SSID) function in the first WIFI chip may be triggered and the second WIFI chip may be turned off. The first WIFI chip may be triggered to operate on the first frequency band or the second frequency band.

It should be noted that the first WIFI chip and the second WIFI chip involved in the embodiments may be interchanged, that is, the terms "first" and "second" should not be interpreted as limitations to the composition of the WIFI chips involved in the embodiments. In an exemplary implementation mode of the present embodiment, the first frequency band may be a 5G band and the second frequency band may be a 2.4G band. The above two bands are merely two operation frequency bands most commonly used in the related technology, and the application of other frequency bands that may be supported in WIFI technology also falls within the protection scope of the present disclosure.

In an exemplary implementation mode of the present embodiment, after the first WIFI chip and the second WIFI chip are triggered to operate in the operation mode indicated by the instruction, the operating method in the present embodiment may further include the following acts.

Whether the first WIFI chip and/or the second WIFI chip have user access may be periodically detected. Upon detecting that the first WIFI chip and/or the second WIFI chip have user access, periodical detection may be triggered again. Upon detecting that the first WIFI chip and/or the second WIFI chip have no user access, a WIFI chip without user access may be deactivated.

By virtue of the periodical detection mechanism, the operation state of the current WIFI chips can be effectively detected, and when a certain WIFI chip is detected to have no user access, the WIFI chip is unloaded or deactivated, thereby effectively saving power consumption.

Another embodiment of the present disclosure provides an operating apparatus of WIFI chips in a WIFI device. The operating device is configured to execute the above embodiments and exemplary implementation modes, and what has been described is not repeated herein. The term "module" used below refer to combination of software and/or hardware which is able to realize certain functions. Although the operating device described in the subsequent embodiments is preferably realized by software, the implementation based on hardware or combination of software and hardware is also possible and conceivable.

Fig. 3 is a block diagram showing the structure of an operating device of WIFI chips in a WIFI device according to an embodiment of the present disclosure. As shown in Fig. 3, an operating device of Wireless Fidelity (WIFI) chips in a WIFI device may include a receiving module 32 and a triggering module 34. The receiving module 32 may be configured to receive an instruction indicating selection of an operation mode of a first WIFI chip and a second WIFI chip in the WIFI device. The triggering module 34 is coupled with the receiving module 32, and may be configured to trigger the first WIFI chip to operate on a first frequency band and the second WIFI chip to operate on a second frequency band when the operation mode indicated by the instruction is a first mode. The first WIFI chip supports the first frequency band and the second frequency band, and the second WIFI chip supports the second frequency band.

The triggering module 34 may also be configured to trigger activation of a plurality of SSID functions in the first WIFI chip and turn off the second WIFI chip when the operation mode indicated by the instruction is a second mode. The first WIFI chip is triggered to operate on the first frequency band or the second frequency band.

Alternatively, the triggering module 34 may also be configured to trigger activation of a single SSID function in the first WIFI chip and turn off the second WIFI chip when the operation mode indicated by the instruction is a third mode. The first WIFI chip is triggered to operate on the first frequency band or the second frequency band.

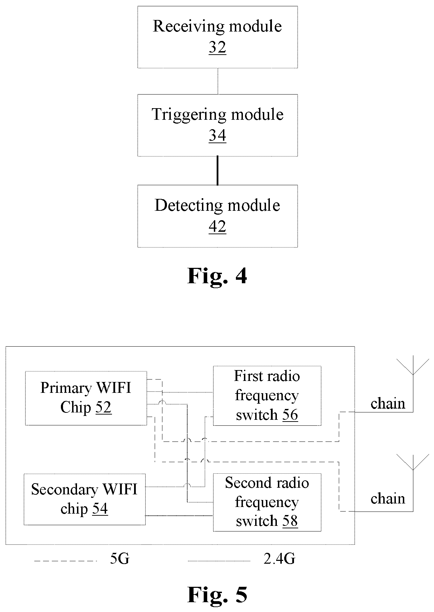

Fig. 4 is a block diagram showing the structure of an operating device of WIFI chips in a WIFI device according to an embodiment of the present disclosure. As shown in Fig. 4, the operating device may further include a detecting module 42. The detecting module 42 may be configured to periodically detect whether the first WIFI chip and/or the second WIFI chip have user access. Upon detecting that the first WIFI chip and/or the second WIFI chip have user access, periodical detection may be triggered again. Upon detecting that the first WIFI chip and/or the second WIFI chip have no user access, a WIFI chip without user access may be deactivated.

Fig. 5 is a block diagram showing the structure of a WIFI device according to an embodiment of the present disclosure. As shown in Fig. 5, the WIFI device may include a primary WIFI chip 52, a secondary WIFI chip 54, a first radio frequency switch 56 and a second radio frequency switch 58. The first radio frequency switch 56 and the second radio frequency switch 58 may be respectively coupled to the primary WIFI chip 52 and the secondary WIFI chip 54.

The first radio frequency switch 56 and the second radio frequency switch 58 may cooperate with each other and may be configured to control selection of an operation mode of the primary WIFI chip 52 and the secondary WIFI chip 54.

The first radio frequency switch 56 and the second radio frequency switch 58 may be configured to control the primary WIFI chip 52 to operate on a first frequency band and the secondary WIFI chip 54 to operate on a second frequency band when the selected operation mode is a first mode. The primary WIFI chip 52 supports the first frequency band and the second frequency band, and the secondary WIFI chip 54 supports the second frequency band.

In an exemplary embodiment, the first radio frequency switch 56 and the second radio frequency switch 58 may be configured to control, when the selected operation mode is a selected mode, a plurality of Service Set Identifier (SSID) functions in the primary WIFI chip 52 are activated and the secondary WIFI chip 54 is turned off, the primary WIFI chip 52 to operate on the first frequency band or the second frequency band.

In an exemplary embodiment, the first radio frequency switch 56 and the second radio frequency switch 58 may be configured to control, when the selected operation mode is a third mode, a single Service Set Identifier (SSID) function in the primary WIFI chip 52 is activated and the secondary WIFI chip 54 is turned off, the primary WIFI chip 52 to operate on the first frequency band or the second frequency band.

In an exemplary embodiment, the first frequency band may be a 5G band and the second frequency band may be a 2.4G band.

The solution will now be illustrated by exemplary embodiments of the present disclosure.

The present exemplary embodiment provides a method and device for implementing an inter-frequency function based on two WIFI chips. The device includes a primary WIFI chip and a secondary WIFI chip. The primary WIFI chip corresponds to the first WIFI chip in the previous embodiments. The primary WIFI chip has a higher performance, supports a 5G band and a 2.4G band, and may support intra-frequency SSID functions while providing a higher rate. The secondary WIFI chip corresponds to the second WIFI chip in the previous embodiments. The performance of the secondary WIFI chip may be lower, and the secondary WIFI chip may support the 2.4G band only. Due to size restrictions of MIFI products, the device maintains the design with two antennae. In order to ensure that the two WIFI chips share the same two antennae while reducing the intra-frequency signal interference between the two chips, two radio frequency switches are added in the hardware layer. The radio frequency switch on the 2.4G band may be controlled in the physical layer so as to ensure that only one chip may normally operate on the 2.4G band at the same time.

Based on the provided device of the present exemplary embodiment, the method of implementing the inter-frequency function based on two WIFI chips may follow a principle which is described in detail as follows. In a multi-SSID inter-frequency mode (i.e., the first mode mentioned in the present embodiment), both the primary WIFI chip and the secondary WIFI chip operate normally. A radio frequency switch 1 and a radio frequency switch 2 are switched to a secondary chip operation mode, so that the 2.4G band of the primary WIFI chip is turned off, the primary WIFI chip operates on the 5G band, and the secondary WIFI chip operates on the 2.4G band.

In addition, for the multi-SSID inter-frequency operation mode, a specific sleep mechanism is added in a software layer, so as to actively turn off, when there is no user accessing a WIFI chip, the WIFI chip without user access. The WIFI chip being turned off may be activated again in a manner of pressing a button when the user needs to use this WIFI chip.

In the present exemplary embodiment, the two WIFI chips may also implement a single SSID mode. The principle of the method is to control the primary WIFI chip to operate normally while turning off the secondary WIFI chip, and switch the radio frequency switch 1 and the radio frequency switch 2 to a primary WIFI chip operation mode, so as to ensure that the primary WIFI chip can operate on the 2.4G band or the 5G band.

In the present embodiment, the two WIFI chips may also realize a multi-SSID intra-frequency mode. The principle of the method is to turn on the primary WIFI chip while turning off the secondary WIFI chip, and the primary WIFI chip activates an SSID intra-frequency mode, the radio frequency switch 1 and the radio frequency switch 2 are switched to the primary WIFI chip operation mode, so as to ensure that the primary WIFI chip can operate on the 2.4G band or the 5G band.

In the present exemplary embodiment, modification is made based on existing hardware structure so as to support two WIFI chips and enable the MIFI product to actually support inter-frequency function. At the same time, the problem of high power consumption and signal interference is solved by a periodical sleep mechanism.

### First exemplary embodiment

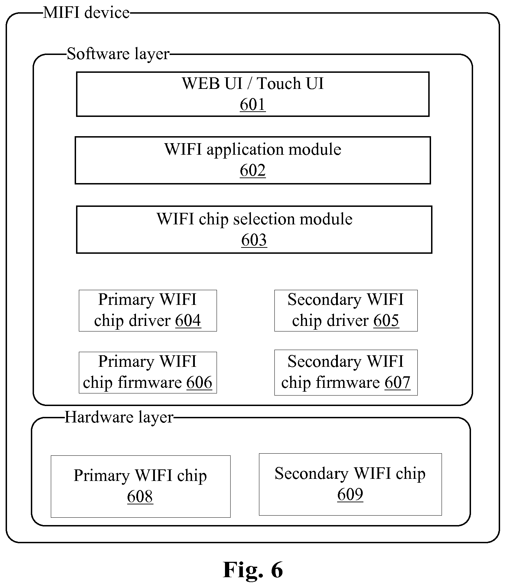

Fig. 6 is a block diagram showing the structure of a WIFI device according to an exemplary embodiment of the present disclosure. The MIFI is based on two parts, i.e., a hardware layer and a software layer. According to the present exemplary embodiment, the hardware layer is suggested to be modified in various aspects such as power supply and chip interface, so as to support two WIFI chips. Relevant application logic in the software layer may be adjusted to select the WIFI chip to enable the selection of operating WIFI chip(s) according to the WIFI operation mode configured via a user interface (UI). As shown in Fig. 6, the MIFI device may include a WEB UI or Touch UI 601, a WIFI application module 602, a WIFI chip selection module 603, a primary WIFI chip driver 604, a secondary WIFI chip driver 605, a primary WIFI chip firmware 606, a secondary WIFI chip firmware 607, a primary WIFI chip 608 and a second WIFI chip 609.

The WEB UI or Touch UI 601 is namely a UI interface of the MIFI, and is configured to support the selection of the user regarding the WIFI operation mode and the configuration regarding WIFI sleep rules.

The WIFI application module 602 is configured to interact with the UI, and decide the manner of loading the primary WIFI chip and the secondary WIFI chip according to the current configuration mode of the user. In order to save the power, the WIFI application module 602 may be suggested to be equipped with a timer, so as to periodically determine the number of users accessing the current WIFI chip and select, based on the number of accessing users, whether to separately deactivate/unload/disable a certain WIFI chip.

The WIFI chip selection module 603 is configured to control the switching of the radio frequency switch 1 and the radio frequency switch 2 in the hardware layer according to the WIFI operation mode set by the current user, so as to ensure that only one chip can normally operate on the 2.4G band at the same time.

The primary WIFI chip driver 604 is configured to ensure that the primary WIFI chip can be loaded separately or unloaded separately.

The secondary WIFI chip driver 605 is configured to ensure that the secondary WIFI chip can be loaded separately or unloaded separately.

The primary WIFI chip firmware 606 is configured to ensure that the primary WIFI chip can be loaded separately or unloaded separately.

The secondary WIFI chip firmware 607 is configured to ensure that the secondary WIFI chip can be loaded separately or unloaded separately.

In this exemplary embodiment, since the manner of loading the primary WIFI chip and the secondary WIFI chip needs to be determined based on the WIFI operation mode, it may be suggested to ensure that the firmware and the driver of the primary WIFI chip and the secondary WIFI chip can be loaded separately and unloaded separately. Therefore, the firmware and driver of the primary WIFI chip and the secondary WIFI chip are suggested to be separately stored and compiled.

The primary WIFI chip 608 is configured to ensure that the primary WIFI chip operates independently.

The secondary WIFI chip 609 is configured to ensure that the secondary WIFI chip operates independently.

It is to be noted that in the present exemplary embodiment, the primary WIFI chip and the secondary WIFI chip may share the WIFI antennae.

### Second exemplary embodiment

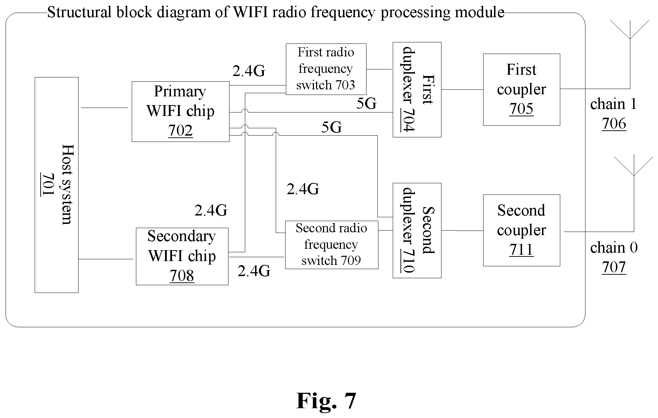

Fig. 7 is a block diagram showing the structure of a WIFI radio frequency processing module according to an exemplary embodiment of the present disclosure. The figure mainly shows how the underlying hardware is modified to achieve processing logic that supports the two WIFI chips to operate normally at the same time. As shown in Fig. 7, two radio frequency switches are added in the hardware layer, and are configured to control the underlying radio frequency switching of the 2.4G band, so as to ensure that only one chip can operation normally on the 2.4G band at the same time. The WIFI radio frequency processing module includes: a host system 701, a primary WIFI chip 702, a first radio frequency switch 703, a first duplexer 704, a first coupler 705, a chain 1 antenna (also referred to as antenna 1) 706, a chain 0 antenna (also referred to as antenna 2), a secondary WIFI chip 708, a second radio frequency switch 709, a second duplexer 710 and a second coupler 711.

The host system 701 refers to a device board, and WIFI chips may be connected to the device board.

The primary WIFI chip 702 has higher performance, supports both the 5G band and the 2.4G band, and can support intra-frequency SSID function while providing higher rate.

The first radio frequency switch 703 is configured to control the 2.4G radio frequency switches of the primary WIFI chip and the secondary WIFI chip on the chain 1 antenna. When the first radio frequency switch 703 switches to a primary WIFI chip mode, only the 2.4G radio frequency of the primary WIFI chip may operate normally. When the second radio frequency switch 709 switches to the secondary WIFI chip mode, only the 2.4G radio frequency of the secondary WIFI chip may operate normally. The first radio frequency switch 703 can control that the chain 1 antenna does not need to process the 2.4G radio frequency of the primary WIFI chip and the secondary WIFI chip at the same time so as to prevent the occurrence of signal interference.

The first duplexer 704 is configured to isolate the transmitting and receiving signals to ensure that the chain 1 antenna can normally receive and transmit signals at the same time.

The first coupler 705 is configured to detect a transmission power and control transmission accuracy.

The chain 1 antenna 706 is a WIFI antenna.

The chain 0 antenna 707 is a WIFI antenna.

The two antennae are configured to achieve related functions of WIFI Multi-In Multi-Out (MIMO).

The secondary WIFI chip 708 may have a lower performance and only needs to support the 2.4G band.

The second radio frequency switch 709 is configured to control the 2.4G radio frequency switch of the primary WIFI chip and the secondary WIFI chip on the chain 0 antenna 706. When the second radio frequency switch 709 switches to the primary WIFI chip mode, only the 2.4G radio frequency of the primary WIFI chip can operate normally. When the second radio frequency switch 709 switches to the secondary WIFI chip mode, only the 2.4G radio frequency of the secondary WIFI chip can operate normally. The second radio frequency switch 709 can control that the chain 0 antenna does not need to process the 2.4G radio frequency of the primary WIFI chip and the secondary WIFI chip at the same time so as to prevent the occurrence of signal interference.

The second duplexer 710 is configured to isolate transmitting and receiving signals to ensure that the chain 0 antenna 706 can normally receive and transmit signals at the same time.

The second coupler 711 is configured to detect a transmission power and control transmission accuracy,

### Third exemplary embodiment

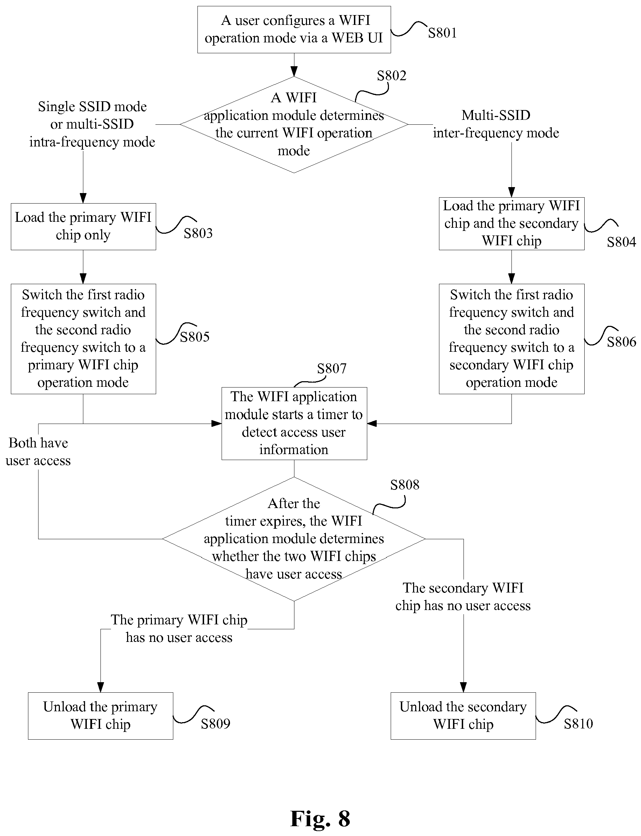

Fig. 8 is a flowchart of a processing method for WIFI operation mode according to an exemplary embodiment of the present disclosure. Fig. 8 shows how a WIFI application performs chip selection according to the current WIFI operation mode, and also shows the processing logic regarding sleep mechanism. As shown in Fig. 8, the method may include the following acts.

At act S801, a user configures a WIFI operation mode and the rules of the mechanism via a WEB UI/Touch UI interface.

At act S802, a WIFI application module determines the WIFI operation mode configured via the current UI. When the WIFI operation mode is a single SSID mode or a multi-SSID intra-frequency mode, act S803 is executed, and when the WIFI operation mode is a multi-SSID inter-frequency mode, act S804 is executed.

At act S803, a WIFI chip selection module may load the primary WIFI chip only.

Based on the configuration of the operation mode of the primary WIFI chip, the primary WIFI chip may open a single SSID only if the operation mode of the primary WIFI chip is a single SSID mode, and the primary WIFI chip may activate multiple SSIDs which operate on the corresponding frequency bands if the operation mode of the primary WIFI chip is a multi-SSID mode.

At act S804, the WIFI chip selection module may load the primary WIFI chip and the secondary WIFI chip separately.

The WIFI chip selection module may control the primary WIFI chip to operate on the 5G band and the secondary WIFI chip to operate on the 2.4G band.

At act S805, in the single SSID mode or multi-SSID intra-frequency mode, the WIFI chip selection module may switch the first radio frequency switch and the second radio frequency switch to a primary WIFI chip operation mode.

Through this act, the primary WIFI chip can be ensured to operate on the 2.4G band or the 5G band.

At act S806, in the multi-SSID inter-frequency mode, the WIFI chip selection module may switch the first radio frequency switch and the second radio frequency switch to a secondary WIFI chip operation mode.

That is, the 2.4G band of the primary WIFI chip is turned off, both the primary WIFI chip and the secondary WIFI chip may operate, and the primary WIFI chip operates on the 5G band while the secondary WIFI chip operates on the 2.4G band

At act S807, the WIFI application module starts a timer to detect access user information.

After the WIFI application module starts the WIFI chips, a timer may be started. The time set on the timer may be acquired based on the sleep rules configured by the user via the UI. If there is a user accessing the WIFI chips, the timer may be reset.

At act S808, after the timer expires, the WIFI application module determines whether or not the two WIFI chips have user access. If both WIFI chips have user access, the WIFI chips do not enter a sleep state, the timer is reset and act S807 is further executed.

At act S809, if the primary WIFI chip has no user access, the primary WIFI chip is unloaded.

At act S810, if the secondary WIFI chip has no user access, the secondary WIFI chip is unload.

It should be noted that, in the present exemplary embodiment, if the user wishes to access the WIFI chip after the WIFI chip is unloaded, the WIFI chip may be reactivated in a way of pressing a button.

Through the above-mentioned exemplary embodiments, modification is made based on existing hardware structure so as to support two WIFI chips and enable the MIFI product to actually support inter-frequency function. At the same time, the problem of high power consumption and signal interference is solved by a periodical sleep mechanism.

The above is only the exemplary embodiments of the present disclosure, and not intended to limit the present disclosure. As will occur to a person skilled in the art, the present disclosure is susceptible to various modifications and changes. Any modifications, equivalent replacements, improvements and the like made within the principle of the present disclosure shall fall within the scope of protection defined by the appended claims of the present disclosure.

### Industrial Applicability

As described above, the above-described embodiments and exemplary embodiments solves the problem that the single WIFI chip in MIFI products of the related technology can only implement an inter-frequency function by adopting a manner of channel switching, thus avoiding intermittent loss of scanning of SSID, unsuccessful access or connection interruption caused by the adoption of channel switching for realizing the inter-frequency function. By virtue of the solution, provision of the inter-frequency function is truly realized on MIFI.

## Claims

1. An operating method of Wireless Fidelity, WIFI, chips in a WIFI device, comprising:
receiving an instruction indicating selection of an operation mode of a first WIFI chip and a second WIFI chip in the WIFI device; and
triggering the first WIFI chip to operate on a first frequency band and the second WIFI chip to operate on a second frequency band when the operation mode indicated by the instruction is a first mode, wherein the first WIFI chip supports the first frequency band and the second frequency band, and the second WIFI chip supports the second frequency band.

2. The operating method as claimed in claim 1, further comprising:
triggering activation of a plurality of Service Set Identifier, SSID, functions in the first WIFI chip and turning off the second WIFI chip when the operation mode indicated by the instruction is a second mode; and
triggering the first WIFI chip to operate on the first frequency band or the second frequency band.

3. The operating method as claimed in claim 1, further comprising:
triggering activation of a single Service Set Identifier, SSID, function in the first WIFI chip and turning off the second WIFI chip when the operation mode indicated by the instruction is a third mode; and
triggering the first WIFI chip to operate on the first frequency band or the second frequency band.

4. The operating method as claimed in claim 2 or 3, wherein after triggering the first WIFI chip and the second WIFI chip to operate in the operation mode indicated by the instruction, the operating method comprises:
periodically detecting whether the first WIFI chip and/or the second WIFI chip have user device access, wherein upon detecting that the first WIFI chip and/or the second WIFI chip have user access, periodical detection is triggered again; and upon detecting that the first WIFI chip and/or the second WIFI chip have no user access, a WIFI chip without user access is deactivated.

5. The operating method as claimed in any one of claims 1 to 3, wherein the first frequency band is a 5G band and the second frequency band is a 2.4G band.

6. A Wireless Fidelity, WIFI, device, comprising: a primary WIFI chip, a secondary WIFI chip, a first radio frequency switch and a second radio frequency switch, wherein the first radio frequency switch and the second radio frequency switch are respectively coupled to the primary WIFI chip and the secondary WIFI chip;
the first radio frequency switch and the second radio frequency switch cooperate with each other and are configured to control selection of an operation mode of the primary WIFI chip and the secondary WIFI chip; and
the first radio frequency switch and the second radio frequency switch are configured to control the primary WIFI chip to operate on a first frequency band and the secondary WIFI chip to operate on a second frequency band when the selected operation mode is a first mode, wherein the primary WIFI chip supports the first frequency band and the second frequency band, and the secondary WIFI chip supports the second frequency band.

7. The WIFI device as claimed in claim 6, wherein the first radio frequency switch and the second radio frequency switch are configured to control, when the selected operation mode is a selected mode, a plurality of Service Set Identifier, SSID, functions in the primary WIFI chip are activated and the secondary WIFI chip is turned off, the primary WIFI chip to operate on the first frequency band or the second frequency band.

8. The WIFI device as claimed in claim 7, wherein the first radio frequency switch and the second radio frequency switch are configured to control, when the selected operation mode is a third mode, a single Service Set Identifier, SSID, function in the primary WIFI chip is activated and the secondary WIFI chip is turned off, the primary WIFI chip to operate on the first frequency band or the second frequency band.

9. The WIFI device as claimed in any one of claims 6 to 8, wherein the first frequency band is a 5G band and the second frequency band is a 2.4G band.

10. An operating device of Wireless Fidelity, WIFI, chips in a WIFI device, the operating device comprising:
a receiving module, configured to receive an instruction indicating selection of an operation mode of a first WIFI chip and a second WIFI chip in the WIFI device; and
a triggering module, configured to trigger the first WIFI chip to operate on a first frequency band and the second WIFI chip to operate on a second frequency band when the operation mode indicated by the instruction is a first mode, wherein the first WIFI chip supports the first frequency band and the second frequency band, and the second WIFI chip supports the second frequency band.

11. The operating device as claimed in claim 10, further comprising:
a detecting module, configured to periodically detect whether the first WIFI chip and/or the second WIFI chip have user device access, wherein upon detecting that the first WIFI chip and/or the second WIFI chip have user access, periodical detection is triggered again; and upon detecting that the first WIFI chip and/or the second WIFI chip have no user access, a WIFI chip without user access is deactivated.
